# EUROPEAN PATENT APPLICATION

(11) **EP 3 392 188 A1**
(43) Date of publication of application: **24.10.2018**
(21) Application number: 18177608.9
(22) Date of filing: 11.07.2016
(51) Int. Cl.: B66B 11/04, B66B 9/02

(54) **ACTIVE VIBRATION DAMPER FOR A LINEAR PROPULSION SYSTEM OF A ROPELESS ELEVATOR**

(30) Priority: 09.07.2015 US 201562190456 P
(62) Divisional of application: 16178834.4
(71) Applicant: Otis Elevator Company, Farmington, Connecticut 06032 (US)
(72) Inventor: BLANC, Arthur, East Hartford, CT Connecticut 06108 (US)
(74) Representative: Dehns

(57) **Abstract**

A linear propulsion assembly imparts a force upon an elevator car traveling in a hoistway, and includes primary and secondary portions, and an active damper system. The primary portion mounts to one of the car and the hoistway, and includes electric coils. The secondary portion mounts to the other of the car and the hoistway, and includes a rail and magnets engaged to the rail for moving the secondary portion with respect to the primary portion. The damper system contacts the rail for damping rail vibration, and includes a sensor, a controller, a force actuator, and an enclosure. The sensor sends a signal, in response to vibration in the rail, to the controller. The actuator generates a force in response to a control signal from the controller to reduce the vibration in the rail. The controller and the actuator are disposed in the enclosure which is embedded in the rail.

## Description

### BACKGROUND

The present disclosure relates to elevators and, more particularly, to a multicar, self-propelled elevator system having a linear propulsion system.

Self-propelled elevator systems, also referred to as ropeless elevator systems, are useful in certain applications (e.g., high rise buildings) where the mass of the ropes for a roped system is prohibitive and there is a desire for multiple elevator cars to travel in a single lane. There exist self-propelled elevator systems in which a first lane is designated for upward traveling elevator cars and a second lane is designated for downward traveling elevator cars. At least one transfer station is provided in the hoistway to move cars horizontally between the first lane and second lane.

Existing self-propelled elevators employ linear motors having secondary portions that include permanent magnets embedded in a rail-like structure. The secondary portions are typically under high dynamic forces due to the magnetic structures. These forces may induce vibrations that excite resonances (modes) of the structure. Any vibration may deform the secondary portion, which in turn affects air gap widths between moving structures that may negatively impact thrust and/or adversely impact ride quality.

### SUMMARY

A linear propulsion assembly for imparting a force upon a car in a hoistway of an elevator system according to one, non-limiting, embodiment of the present disclosure includes a primary portion constructed and arranged to mount to one of the car and the hoistway, the primary portion including a plurality of electric coils; a secondary portion constructed and arranged to mount to the other of the car and the hoistway, the secondary portion including a rail and plurality of magnets engaged to the rail and for moving the secondary portion with respect to the primary portion; and an active damper system in contact with the rail for damping rail vibration.

Additionally to the foregoing embodiment, the active damper system includes a sensor generating a sensor signal in response to vibration in the rail, a controller receiving the sensor signal and generating a control signal, and a force actuator constructed and arranged to generate a force in response to the control signal to reduce the vibration in the rail.

In the alternative or additionally thereto, in the foregoing embodiment, the active damper system includes an enclosure with the sensor, the controller and the force actuator disposed in the enclosure.

In the alternative or additionally thereto, in the foregoing embodiment, the enclosure is embedded in the rail.

In the alternative or additionally thereto, in the foregoing embodiment, the active damper system includes a plurality of actuator elements in contact with the rail.

In the alternative or additionally thereto, in the foregoing embodiment, the active damper system includes a backing bar and a plurality of integrated actuator elements disposed between and in contact with the rail and the backing bar.

In the alternative or additionally thereto, in the foregoing embodiment, the backing bar is made of aluminum.

In the alternative or additionally thereto, in the foregoing embodiment, each one of the plurality of integrated actuator elements include a sensor generating a sensor signal in response to vibration in the rail, a controller receiving the sensor signal and generating a control signal, and a force actuator constructed and arranged to generate a force in response to the control signal to reduce the vibration in the rail.

In the alternative or additionally thereto, in the foregoing embodiment, the active damper system include a power source and electric conductors extending between the power source and the plurality of integrated actuator elements.

In the alternative or additionally thereto, in the foregoing embodiment, the backing bar is a bus for routing the electric conductors, and is constructed and arranged to add flexural stiffness to the rail.

In the alternative or additionally thereto, in the foregoing embodiment, the sensor is an accelerometer.

In the alternative or additionally thereto, in the foregoing embodiment, the force actuator is one of an inertial mass actuator, a shaker actuator, a hydraulic actuator and a piezoelectric actuator.

In the alternative or additionally thereto, in the foregoing embodiment, the rail includes a first side through which the plurality of magnets are exposed and an opposite second side engaged to the active damper system.

An elevator system according to another, non-limiting, embodiment includes a stationary support structure defining a hoistway; a car disposed in the hoistway; a linear propulsion assembly for applying a force to the car, the assembly including a first rail engaged to one of the support structure and the car, a plurality of magnets mounted to the first rail, a second rail co-extending with and spaced laterally from the first rail and engaged to the other of the support structure and the car, and a plurality of electric coils mounted to the second rail; and an active damper system engaged to at least one of the first and second rails for damping rail vibration.

Additionally to the foregoing embodiment, the active damper system includes a plurality of actuator elements engaged to and spaced along at least one of the first and second rails.

In the alternative or additionally thereto, in the foregoing embodiment, the active damper system includes a plurality of actuator elements engaged to and spaced along the first rail.

In the alternative or additionally thereto, in the foregoing embodiment, the first rail is engaged to the car and the second rail is engaged to the support structure.

In the alternative or additionally thereto, in the foregoing embodiment, the plurality of magnets are approximate to a first side of the first rail and the actuator elements are adhered to an opposite second side of the first rail.

In the alternative or additionally thereto, in the foregoing embodiment, the elevator system includes a plurality of brackets spaced along the first rail with each bracket engaged between the car and the first rail, and wherein the each actuator element is located between a respective pair of brackets.

In the alternative or additionally thereto, in the foregoing embodiment, each one of the plurality of actuator elements includes a sensor generating a sensor signal in response to vibration in the first rail, a controller receiving the sensor signal and generating a control signal, and a force actuator constructed and arranged to generate a force in response to the control signal to reduce the vibration in the rail.

The foregoing features and elements may be combined in various combinations without exclusivity, unless expressly indicated otherwise. These features and elements as well as the operation thereof will become more apparent in light of the following description and the accompanying drawings. However, it should be understood that the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a side view of a multicar elevator system as one, non-limiting, exemplary embodiment of the present disclosure;
FIG. 2 is a top-down view of a car and portions of a linear propulsion assembly of the elevator system;
FIG. 3 is a partial side view of the linear propulsion assembly;
FIG. 4 is a partially exploded perspective view of a primary portion of the linear propulsion assembly;
FIG. 5 is a perspective view of the primary portion;
FIG. 6 is a schematic of a drive system of the elevator system;
FIG. 7 is a partial perspective view of two secondary portions, a mounting member, brackets, and an active damping system of the linear propulsion assembly; and
FIG. 8 is a perspective cross section of an actuator element of the active damping system.

### DETAILED DESCRIPTION

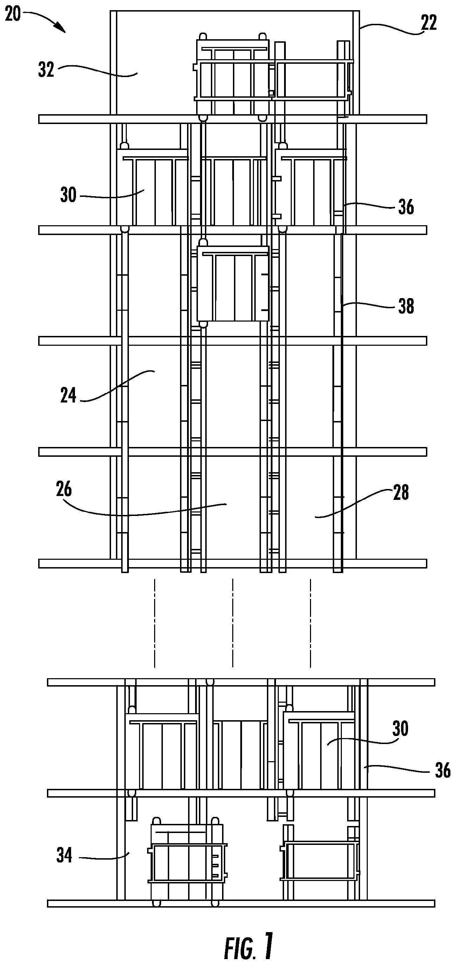

Referring to FIG. 1, an elevator system 20 may include a stationary support structure 22 that may generally be an integral part of a multi-story building, and at least one lane or hoistway (i.e., three hoistways 24, 26, 28 illustrated) having boundaries generally defined by the structure 22. The system 20 further includes at least one car 30 that travels within at least one of the hoistways 24, 26, 28. The car 30 may travel in a vertical direction, and may further be in a dedicated upward direction in hoistway 26 and a dedicated downward direction in hoistway 28 (as one, non-limiting, example). It is further contemplated and understood that the elevator system 20 may be self-propelled, and may have multiple cars 30 traveling in any one hoistway 24, 26, 28 with the multiple cars traveling in an upward direction in hoistway 26 and a downward direction in hoistway 28.

The elevator system 20 may further include upper and lower transfer stations 32, 34 generally located at or above the top floor and at or below the bottom floor, respectively. Both stations 32, 34 may impart horizontal movement of the cars 30, thereby facilitating transfer of the cars between hoistways 24, 26, 28. Although not shown in FIG. 1, one or more intermediate transfer stations, similar to stations 32, 34, may be used between the first floor and the top floor.

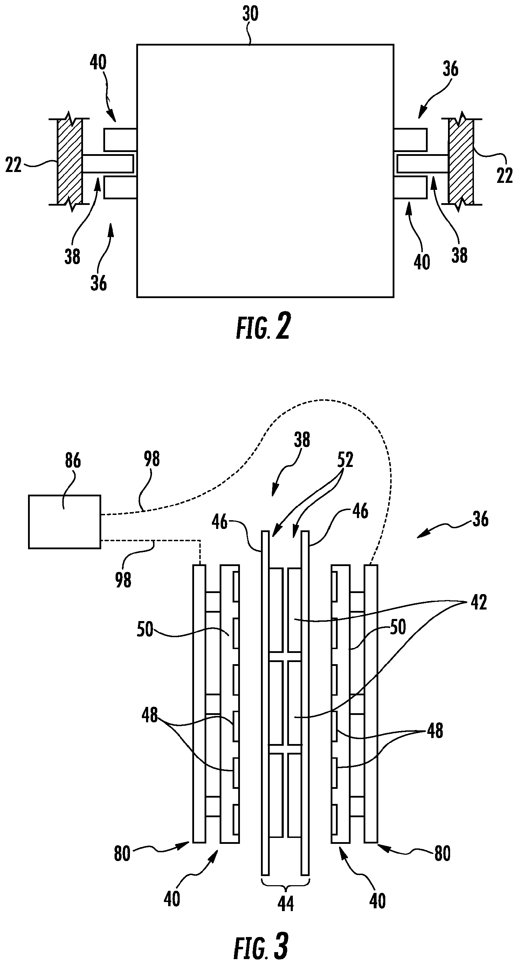

Referring to FIGS. 1 and 2, at least one linear propulsion assembly 36 of the elevator system 20 is generally engaged between the cars 30 and the stationary support structure 22. A magnetic field generated by the assembly 36 generally propels the cars 30 within the hoistways 24, 26, 28 and, potentially, the transfer stations 32, 34. Each car 30 may further be propelled with two assemblies 36 mounted between opposite sides of the car 30 and opposing walls of the support structure 22. Each assembly 36 may include a primary portion 38 engaged to the support structure 22, and two moving, secondary portions 40 engaged to the cars 30. The primary portion 38 may be located between and spaced laterally inward from the two secondary portions 40. Both portions 38, 40 are elongated and extend longitudinally in the direction of car travel. It is further contemplated and understood that positioning of the portions 38, 40 may be interchanged with the primary portion 38 engaged to the car 30 and the secondary portion 40 engaged to the support structure 22.

Referring to FIGS. 2 and 3, the primary portion 38 may include a plurality of electric windings or coils 42 and a rail 44 that extends along the direction of car travel. The rail 44 may be composed of a plurality of panels 46 for structural support and mounting of the coils 42. The coils 42 and panels 46 may be modular in form and may include any variety of configurations necessary to generate the magnetic flux that imparts force on the secondary portion 40 to move or hold the car 30. Each secondary portion 40 may include a plurality of permanent magnets 48 and a rail 50 for supporting the magnets. The rail 44 of the primary portion 38 may be spaced laterally between the rails 50 of the two secondary portions 40. It is further contemplated and understood that the rail 50 of the secondary portion 40 may be orientated between two rails 44 of the primary portion 38.

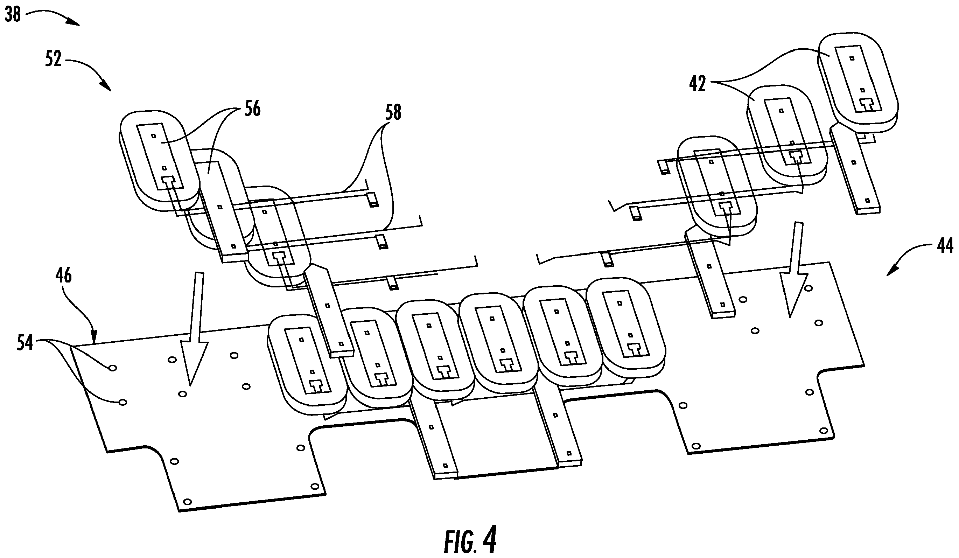

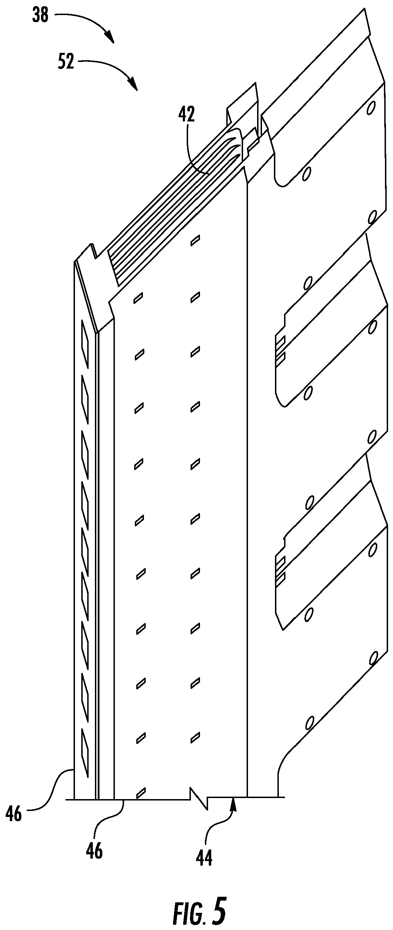

Referring to FIGS. 4 and 5, the primary portion 38 may include a plurality of modular assemblies 52 with each assembly including at least one panel 46 of the rail 44 and a portion of the coils 42 supported by the panel. Two modular assemblies 52 may be arranged so that the coils 42 are adjacent to each other and positioned between two secondary portions 40 (see FIG. 3). Each panel 46 may include a plurality of mounting holes 54 formed therein. Coil cores 56 of the primary assembly 38 support the coils 42, and are secured at the mounting holes 54 via fasteners. Electrical conductors 58 extend from each coil 42 and may be routed through a common bus (not shown). The mounting panels 46 and coil cores 56 may be made from a non-conductive material, such as fiberglass or plastic.

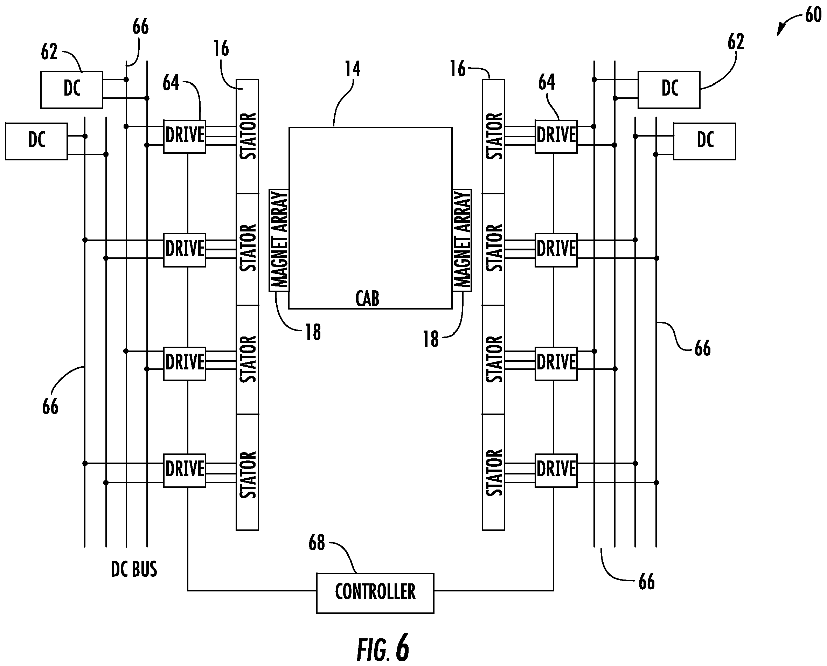

Referring to FIG. 6 a schematic illustration of an exemplary embodiment of a drive system 60 of the elevator system 20 is shown. It is understood that other components (e.g., safeties, brakes, etc.) are not shown in FIG. 6 for ease of illustration. The drive system 60 includes one or more power sources 62 coupled to one or more drives 64 via one or more buses 66. The power sources 62 are DC power sources, but embodiments are not limited to using DC power. DC power sources 62 may be implemented using storage devices (e.g., batteries, capacitors), and may be active devices that condition power from another source (e.g., rectifiers). Drives 64 receive DC power from the DC buses 66 and provide drive signals to the primary portions 38 of the linear propulsion assembly 36. Each drive 64 may be a converter that converts DC power from DC bus 66 to a multiphase (e.g., three phase) drive signal provided to a respective section of the primary portions 38. The primary portion 38 may be divided into the plurality of modular assemblies 52, with each assembly associated with a respective drive 64.

A controller 68 provides control signals to the each of the drives 64 to control generation of the drive signals. Controller 68 may use pulse width modulation (PWM) control signals to control generation of the drive signals by drives 64. Controller 68 may be implemented using a processor-based device programmed to generate the control signals. Controller 68 may also be part of an elevator control system or elevator management system. Elements of FIG. 6 may be implemented in a single, integrated module, and/or be distributed along the hoistways 24, 26, 28.

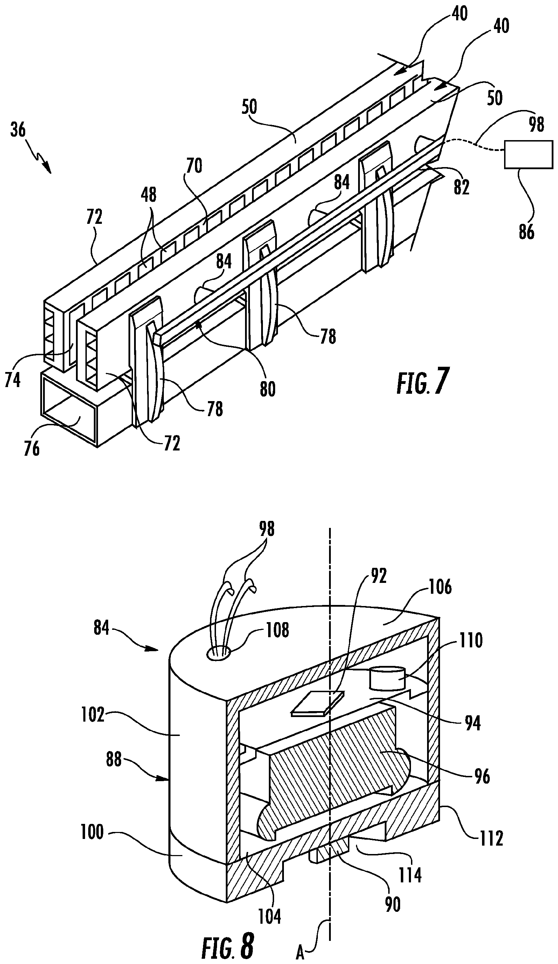

Referring to FIGS. 3 and 7, two opposing secondary portions 40 are illustrated each having a rail 50 and a plurality of permanent magnets 48. The rails 50 are substantially parallel to one-another and each have a first or inward side 70 and an opposite second or outward side 72. The magnets 48 are proximate to the inward side 70 and may be exposed there-through. The inward sides 70 of the rails 50 of each portion 40 are spaced from and oppose one-another thereby defining a gap 74 for receipt of at least a part of the primary portion 38. The width of the gap 74 (i.e., distance between the opposing first sides) is generally greater than the width of the primary portion 38 for maintaining an air space between the sides 70 and the panels 46 of the primary portion 38. The gap 74 may generally be maintained constant by the strength and/or stiffness of the rails 50, and other structural components, over a range of excitation frequencies. The constant gap 74 reduces the risk of friction produced by rubbing between components. Moreover, the gap may be maintained fairly tight and any significant changes may undesirably modify the magnetic field from the secondary portion 40, which in-turn may negatively impact the vibration and ride quality of the elevator system 20.

The linear propulsion assembly 36 may further have an elongated mounting member 76 that co-extends with the rails 50, and a plurality of brackets 78 for securing both secondary portions 40 to the car 30. More specifically, the member 76 may secure directly to the car 30, and the brackets 78 may secure both of the rails 50 to the common member 76. Each bracket 78 may be substantially transverse to the rails 50, may be spaced longitudinally along the rails from the next adjacent bracket 78, and may be engaged directly to the outward side 72 of each rail 50. The brackets 78 facilitate proper positioning of the rails 50 and add a degree of structural rigidity to maintain a consistent width of the gap 74, and therefore consistent air spaces.

The secondary portion 40 includes an active damper system 80 that dampens flexural vibration energy (i.e., as the secondary portion 40 tries to flex) caused by the high dynamic forces due to the magnetic structures. The active damper system 80 may include a backer bar 82, a plurality of actuator elements 84 that may each be individually integrated (i.e., may function individually and independently from one-another), and a power source 86 that may be remotely located for driving the elements 84. Each actuator element 84 may be in contact with and/or adhered to the outward side 72 of the rail 50; may be located and substantially centered between respective brackets 78; and, may extend between and is engaged to the rail and the common backer bar 82. The backer bar 82 is generally elongated, co-extends with the rail 50; and, is spaced therefrom by the elements 84. The backer bar 82 may be supported by and engaged to the brackets 78 or other surrounding support structure for adding both flexural stiffness and potential contribution toward additional vibration absorption or damping by the active damper system 80. The backer bar 82 may be made of any variety of materials that add stiffness while minimizing additional weight. One, non-limiting, example of such a material is an aluminum alloy. It is further understood that the system 80 may not require the additional structure of the bar 82 and/or the elements 84 may be an integral part of, or otherwise embedded in, the rails 50.

Referring to FIG. 8, the actuator elements 84 provide active noise control by sensing vibration in the rail 50 and generating a force to counteract the sense vibration in the rail. Each element 84 may include an enclosure 88, a sensor 90, a controller 92 mounted to a printed circuit board 94, an actuator 96, and at least one electrical conductor 98 connected between the power source 86 and the circuit board 94. The enclosure 88 may include a mounting plate 100 secured to the outward side 72 of the rail 50, and a housing 102 that may releasably secure to the mounting plate 100 at an open end 104, and generally houses the controller 92, circuit board 94 and actuator 96 therebetween. The plate 100 may be adhered to outward side 72 via an adhesive or may be secured via a fastener arrangement. An aperture 108 may communicate through an opposite closed end or outer face 106 of the housing 102 for routing of the conductors 98. It is further contemplated and understood that the mounting plate 100 and/or the housing 102 may be an integral part of the rail 50 or may be embedded into the rail (i.e., through the outward side 72).

The backer bar 82 may generally be hollow functioning as an electrical conduit or bus for routing of the conductors 98 from the elements 84 and to the remote power source 86. It is further contemplated and understood that that the active damper system 80 may not include the remote power source 86 or conductors 98 and instead may include a battery 110 mounted to the circuit board 94 of each element 84.

The controller 92 may be a general-purpose microprocessor executing computer program code to implement the functions described herein. Alternatively, the controller 92 may be implemented in hardware (e.g., an ASIC) or a combination of hardware and software. It is further contemplated and understood that the controller 92 may communicate with the controller 68.

The actuator 96 is generally housed by the housing 102 and may be located directly between the circuit board 94 and the mounting plate 100. The actuator 96 may be implemented using any variety of devices including an inertial mass actuator, shaker actuator, hydraulic actuator, piezoelectric actuator, and others.

The sensor 90 may be generally encased directly between the rail 50 and the mounting plate 100 for facilitating detection of vibration in the rail 50 and then outputting an electrical signal indicative of the vibration. An outer edge or rim 112 of the mounting plate 100 may surround the sensor 90 and define in part a plate recess 114 with the sensor located therein. The mounting plate 100, the housing 102, the sensor 90 and the actuator 96 may be arranged along a common axis A. This arrangement may aid sensing and reducing vibration due to the close proximity of the components. As an exemplary embodiment, the sensor 90 may be an accelerometer, but may be implemented with other vibration sensing technologies. In alternative embodiments, the mounting plate 100 may not be used and the housing may be mounted directly to the rail 50. Sensor 90 may also be positioned on the circuit board 94 or on the interior of the housing 102, rather than in a recess of the mounting plate 100.

The active damping element 84 is integrated in the enclosure 88 containing substantially all parts within one body. Thus, the element 84 requires minimal installation time in the field (e.g., primarily attaching the element 84 onto the rail). In addition, the integrated element 84 is low-cost, due to advances in sensor technologies and mass-produced elements. In a tested feedback-velocity configuration, the integrated element was stable, and was shown to attenuate broadband vibrations by more than 5dB, and single resonances by more than 10dB. Moreover, the integrated element is light-weight, and does not require significant electrical power.

With regard to controller 92 operation, the controller receives the sensor signal from sensor 90. The sensor signal is indicative of vibrations being experienced at the rail 50. Controller 92 generates a control signal to drive the actuator 96 with a frequency and amplitude to reduce or dampen the vibration in the rail 50. The control signal may be derived by a variety of techniques including feedback control and feed-forward control. Controller 92 may filter the sensor signal to isolate known frequency bands of vibration in the elevator system 20 and generate the control signal in response to the presence of known vibrational frequencies. The motion of the force actuator 40 in response to the control signal generates a counteracting force in the rail 50 to reduce vibration in the rail.

In operation, the damper system 80 dampens flexural vibration energy and the added structure of the bar 82 adds flexural stiffness to the rail 50, reducing the overall vibration of the secondary portion 40 of the linear propulsion assembly 36. During operation of the elevator system 20, the secondary portions 40 of the assembly 36 are placed under high dynamic forces due to the magnetic structures. The damper system 80 functions to attenuate resonating vibrations that would otherwise be created by the forces. Therefore, as the car 30 accelerates, the damper system 80 prevents or greatly minimize any vibration resonances placed upon the secondary portions 40. Without such vibrational displacement, the rails 50 will not appreciably deform, and in-turn, the gap 74 width is maintained. With a consistent gap width, thrust of the car 30 is not impaired and ride quality is optimized.

The damper system 80 provides active structural acoustic control by damping the vibrations of potential noise producing sources in the elevator system 20. For example, without the damper system 80, excessive vibration of the rail 50 may cause the air space between rails 50 and rail 44 to quiver or otherwise change. Such an occurrence may produce noise within the car 30 and contribute toward an uncomfortable elevator ride.

While the present disclosure is described with reference to exemplary embodiments, it will be understood by those skilled in the art that various changes may be made and equivalents may be substituted without departing from the spirit and scope of the present disclosure. In addition, various modifications may be applied to adapt the teachings of the present disclosure to particular situations, applications, and/or materials, without departing from the essential scope thereof. The present disclosure is thus not limited to the particular examples disclosed herein, but includes all embodiments falling within the scope of the appended claims.

## Claims

1. A linear propulsion assembly for imparting a force upon a car in a hoistway of an elevator system, the linear propulsion assembly comprising:
a primary portion constructed and arranged to mount to one of the car and the hoistway, the primary portion including a plurality of electric coils;
a secondary portion constructed and arranged to mount to the other of the car and the hoistway, the secondary portion including a rail and plurality of magnets engaged to the rail and for moving the secondary portion with respect to the primary portion; and
an active damper system in contact with the rail for damping rail vibration, the active damper system including a sensor generating a sensor signal in response to vibration in the rail, a controller receiving the sensor signal and generating a control signal, a force actuator constructed and arranged to generate a force in response to the control signal to reduce the vibration in the rail, and an enclosure with the sensor, wherein the enclosure is embedded in the rail, and the controller and the force actuator are disposed in the enclosure.

2. The linear propulsion assembly set forth in claim 1, wherein the sensor is an accelerometer.

3. The linear propulsion assembly set forth in any of claims 1-2, wherein the force actuator is one of an inertial mass actuator, a shaker actuator, a hydraulic actuator and a piezoelectric actuator.

4. The linear propulsion assembly set forth in any preceding claim, wherein the active damper system includes a plurality of actuator elements in contact with the rail.
